# EUROPÄISCHE PATENTSCHRIFT

(11) **EP 0 525 510 B1**
(45) Veröffentlichungstag und Bekanntmachung des Hinweises auf die Patenterteilung: **09.10.1996**
(21) Anmeldenummer: 92112037.4
(22) Anmeldetag: 15.07.1992
(51) Int. Cl.: C08L 67/06

(54) **Wärmehärtbare Formmasse**
Thermosetting moulding material
Masse à mouler thermodurcissable

(30) Priorität: 27.07.1991 DE 4124952
(43) Veröffentlichungstag der Anmeldung: 03.02.1993
(73) Patentinhaber: BASF Aktiengesellschaft, 67063 Ludwigshafen (DE)
(72) Erfinder: Hesse, Anton, Dr., W-6940 Weinheim (DE); Heckmann, Walter, Dr., W-6940 Weinheim (DE); Kroeger, Harald, W-6707 Schifferstadt (DE); Marczinke, Bernd Lothar, Dr., W-6720 Speyer (DE); Warzelhan, Volker, Dr., W-6719 Weisenheim (DE)

(56) Entgegenhaltungen:
- US-A- 3 591 540
- US-A- 3 684 466
- DATABASE WPIL Week 8626, Derwent Publications Ltd., London, GB; AN 86-167219 & JP-A-61 101 552 (TAKEDA CHEMICAL IND KK) 20. Mai 1986

## Beschreibung

Die Erfindung betrifft eine warmhärtbare Formmasse auf Basis eines ungesättigten Polyesterharzes, welches ein Propylenpolymerisat dispergiert enthält.

Formmassen auf Basis von faserverstärkten ungesättigten Polyesterharzen werden in zunehmendem Maße zur Herstellung von Formteilen, insbesondere im Automobilbau, eingesetzt. Sie werden dabei vorwiegend in Form von eingedicktem, flächigem Halbzeug, sogenannten "sheet molding compounds" (SMC) oder als teigförmige Formmasse, sogenannte "bulk molding compounds" (BMC) verarbeitet. In beiden Fällen geht man aus von einem ungesättigten Polyesterharz, das mit Verstärkungsfasern, Füllstoffen, radikalischen Initiatoren und anderen Zusatzstoffen vermischt wird. Die Verarbeitung erfolgt durch Pressen oder Extrudieren bei verhältnismäßig niedriger Temperatur um 130 bis 160°C, wobei auch komplizierte Formwerkzeuge problemlos gefüllt werden können. Die damit hergestellten Formteile weisen - insbesondere wenn den Formmassen schrumpfmindernde Thermoplasten zugesetzt wurden - eine ausgezeichnete Oberfläche auf. Ein entscheidender Nachteil derartiger Formteile ist aber ihre Sprödigkeit, was einem umfassenden Einsatz in solchen Anwendungsgebieten im Wege steht, wo eine erhöhte Zähigkeit bei Stoß- und Schlagbeanspruchung gefordert wird.

Thermoplastische Formmassen mit Langfaserverstärkung weisen demgegenüber eine hervorragende Zähigkeit auf. Sie sind ebenfalls einfach zu verarbeiten, ihre Herstellung durch Imprägnieren der Fasern mit Lösungen oder Schmelzen des Thermoplasten ist jedoch recht aufwendig.

Der Erfindung lag nun die Aufgabe zugrunde, die Vorteile der Formmassen auf Basis von ungesättigten Polyesterharzen mit solchen auf Basis von Thermoplasten zu kombinieren, d.h. Formmassen bereitzustellen, welche sich durch einfache Herstellung und Verarbeitung auszeichnen, darüber hinaus aber bei der Härtung Formteile mit hoher Zähigkeit ergeben.

Gegenstand der Erfindung ist eine wärmehärtbare Formmasse, enthaltend
A) 100 Gew.-Teile eines ungesättigten Polyesters,
B) 0 bis 400 Gew.-Teile eines mit A) copolymerisierbaren Vinyl- oder Allyl-Monomeren,
C) 5 bis 200 Gew.-Teile eines teilkristallinen Propylenhomo- oder -copolymeren mit überwiegendem Propylenanteil, und statistischer Verteilung der Monomeren,
D) 0,01 bis 5 Gew.-Teile eines radikalischen Initiators, und
E) übliche Zusatz- und Hilfsstoffe,
wobei die Komponente C) in Form von festen, runden Partikeln mit glatter Oberfläche und einem mittleren Durchmesser von 1 bis 200 µm in einer kohärenten Phase der Komponenten A) + B) dispergiert ist.

Polypropylen fällt bei der Herstellung im technischen Maßstab als Granulat oder Grieß mit einem Durchmesser von mehr als 1 mm an. Es ist bei Raumtemperatur nicht mahlbar. Bei der recht aufwendigen und wegen der Gefahr von Staubexplosionen nicht ungefährlichen Tieftemperaturmahlung erhält man Partikel mit einem Durchmesser von 150 bis 300 µm, die eine unregelmäßige Form und rauhe, poröse Oberfläche aufweisen. Setzt man solche gemahlene Polypropylenpartikel ungesättigten Polyesterharzen zu und härtet diese, dann weisen die erhaltenen Formteile unruhige Oberfläche auf. Die erfindungsgemäße Dispersion von festen, runden Polypropylen-Partikeln mit glatter Oberfläche und einem Durchmesser von 1 bis 200 µm im Polyesterharz erhält man, wenn man eine Schmelze des Propylenpolymerisats und eine Schmelze des ungesättigten Polyesters gemeinsam einem starken Scherfeld unterwirft.

In der DE-B 1 153 905 ist ein Verfahren zur Herstellung von Formmassen beschrieben, bei dem ein Gemisch aus mehr als 50 Gew.-% Polyolefin und weniger als 50 Gew.-% ungesättigtem Polyesterharz in Gegenwart von Radikalbildnern bei Temperaturen zwischen 60 und 350°C intensiv verknetet wird. Die Komponenten können dabei zunächst in üblichen Mischmaschinen, z.B. Wirbel- oder Rührflügelmischern vorgemischt werden. Dabei entsteht jedoch keine Dispersion von runden, feinteiligen Polyolefinpartikeln im Polyesterharz. Beim Verkneten der Mischung in Gegenwart des Radikalbildners vernetzt das Polyesterharz und ist dann im Polyolefin als kohärenter Phase dispergiert. Die erhaltene Formmasse weist nicht mehr die gute Fließfähigkeit eines ungesättigten Polyesterharzes auf.

In DE-A 1 817 575 ist eine wärmehärtbare Formmasse aus einem ungesättigten Polyester, einem gesättigten flüssigen Polyester und einem thermoplastischen Polymerisat beschrieben. Das Polymerisat - vorzugsweise ein Polyolefin - soll das Ausschwitzen des gesättigten, flüssigen Polyesters beim Warmhärten der Formmasse verhindern. Im Beispiel wird feinteiliges Polyethylen einer Teilchengröße von 8 bis 30 µm einem Polyesterharz zugemischt. Dies ist auf Polypropylen nicht übertragbar, da ein derart feines Polypropylenpulver auch durch Tieftemperaturmahlung nicht herstellbar ist. Ein Vermischen von Polyolefin und ungesättigtem Polyester in einem starken Scherfeld ist in der Druckschrift weder beschrieben noch angedeutet, so daß diese keine Lehre zur Herstellung einer Dispersion von feinteiligen, runden Polypropylenpartikeln in einem ungesättigten Polyesterharz erteilt.

Die DE-A 23 05 246 betrifft eine ungesättigte Polyesterharzmasse, die ein pulverförmiges Olefin-Pfropfpolymerisat dispergiert enthält. Das zugesetzte Pfropfpolymerisat soll die Schrumpfung beim Härten vermindern und das Anhaften des Harzes an der Formwand vermeiden. In den Beispielen werden lediglich Pfropfpolymerisate auf Basis von Polyethylen-bzw. Polybuten-Pulver eingesetzt; eine Übertragung auf Polypropylen ist wiederum nicht ohne weiteres möglich.

Die US-A 4 161 471 schließlich beschreibt SMC- und BMC-Massen, die durch Zusatz eines Chloropren- oder Ethylen/Propylen-Kautschuks elastifiziert werden. Die Ethylen/Propylen-Copolymeren werden in einem aufwendigen Verfahren erst thermisch abgebaut, dann mit Styrol angepastet und mit einer Polyesterharzpaste vermischt. Dabei entsteht eine Öl-in-Öl-Emulsion, d.h., das Propylenpolymerisat liegt nicht in Form von festen Partikeln im Polyesterharz vor.

Zu den einzelnen Komponenten ist folgendes zu sagen:
A) Ungesättigte Polyester sind durch einen Gehalt an 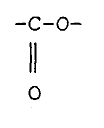 und -CH=CH- Gruppen gekennzeichnet.
   1. Bevorzugt sind die ungesättigten Polyester (UP) im strengeren Sinne. Dies sind Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.
      Die Säurezahl des ungesättigten Polyesterharzes sollte unterhalb von 100, insbesondere zwischen 0 und 50 liegen. Besonders bevorzugt sind Polyesterharze aus Maleinsäure, gegebenenfalls zusammen mit o-Phthalsäure einerseits und Diolen, wie Dipropylenglykol, Diethylenglykol und/oder Propandiol-1,2 andererseits, gelöst in Styrol.
      Besonders gute Anbindung der Polypropylenphase an die Polyesterphase im Formteil erhält man dann, wenn die ungesättigten Polyesterharze cycloaliphatische Bausteine enthalten, vorzugsweise solche auf Basis von Dicyclopentadien, Tetrahydrophthalsäure oder Endomethylentetrahydrophthalsäure. Die Menge der cycloaliphatischen Bausteine im ungesättigten Polyester beträgt vorzugsweise 0,1 bis 2 Mol pro (Maleinsäure + Fumarsäure)-Baustein.
   2. Geeignet sind auch Vinylesterharze (VE-Harze). Kennzeichnend für diese Klasse von Harzen ist die Gruppe 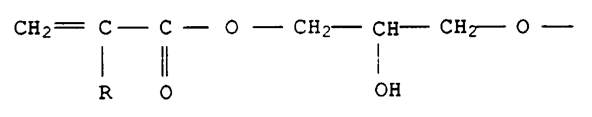 mit R = H oder CH₃.
      Unter VE-Harzen, die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.
   3. Vinylesterurethanharze (VU-Harze) sind bekannt, z.B. aus US-A 3 297 845, US-A 3 772 404, US-A 4 618 658, GB-A 2 217 722 und DE-A 37 44 390. Sie weisen im allgemeinen folgende Gruppen auf:
      a) 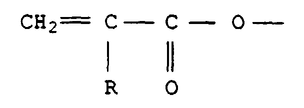 (mit R = H oder CH₃).
      b) 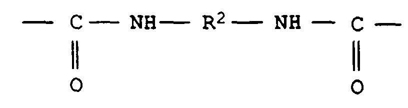 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
      c) -O-R³-O-
         (mit R³ = zweiwertiger aliphatischer, cycloaliphatischer oder aromatischer Rest mit 2 bis 500 C-Atomen, vorzugsweise ein aliphatischer Rest mit 4 bis 100 C-Atomen), sowie gegebenenfalls
      d) -NH-R⁴-NH-
         (mit R⁴ = aliphatischer, cycloaliphatischer oder aromatischer Rest mit 2 bis 100 C-Atomen).
      Vorzugsweise ist das VU-Harz ein Umsetzungsprodukt aus
      - einem polyfunktionellen Isocyanat,
      - gegebenenfalls einem mehrwertigen Alkohol,
      - gegebenenfalls einem mehrwertigen Amin,
      - einem Hydroxyalkyl-(meth)acrylat,
      wobei bei der Umsetzung das Gewichtsverhältnis Isocyanat:(Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.
B) Als Comonomere kommen die üblichen Vinyl- und Allylverbindungen in Frage, bevorzugt Styrol, α-Methylstyrol, Vinyltoluol, Methylmethacrylat, Diallylphthalat und Diallylisophthalat. Sie sind in den Formmassen - je nach Anwendungsgebiet - in Mengen bis zu 400 Gew.-Teilen, vorzugsweise von 20 bis 400 Gew.-Teilen, insbesondere von 20 bis 150 Gew.-Teilen, bezogen auf 100 Gew.-Teile des ungesättigten Polyesters enthalten.
C) Die Propylenpolymerisate sind teilkristallin, ihr Kristallitschmelzpunkt soll höher als 125°C, vorzugsweise höher als 155°C sein. Besonders geeignet sind niedermolekulare Polymerisate mit einem Schmelzflußindex MFI von größer als 10, vorzugsweise zwischen 20 und 150 g/10 min (bei 230°C und 2,16 kg).
   Bevorzugt ist Polypropylen, das durch Polymerisation von Propylen in Gegenwart eines Ziegler-Natta-Katalysatorsystems hergestellt wird.
   Bevorzugt sind auch Pfropfpolymerisate, hergestellt durch Polymerisation von olefinisch ungesättigten Carbonsäuren bzw. Derivaten, insbesondere Acrylsäure und Maleinsäureanhydrid in Gegenwart von Polypropylen. Diese chemische Modifizierung bewirkt eine Verbesserung der Glasfaserhaftung an der Matrix. Häufig genügt ein Zusatz von bis zu 30 Gew.-% Propylenpfropfpolymerisat zu unmodifiziertem Polypropylen.
   Geeignet sind auch Copolymerisate, hergestellt durch statistische Copolymerisation von Propylen mit Ethylen, Buten-1, Penten-1, 3-Methylpenten-1, Hexen-1, Hepten-1 oder Octen-1 oder Dienen, wie z.B. Norbornadien oder Dicyclopentadien, mit einem Propylengehalt von größer als 50 %.
   Verwendet werden können auch Polymerblends, bei denen dem Olefinpolymerisat bis zu 50 Gew.-% anderer thermoplastischer Kunststoffe, wie z.B. Polyamide, gesättigte Polyester, Styrolpolymerisate, Polyethylen oder Polycarbonat zugemischt wurden.
   Das Propylenpolymerisat ist in der Formmasse in Mengen von 5 bis 200, vorzugsweise 10 bis 150 Gew.-Teilen, bezogen auf 100 Gew.-Teile ungesättigtem Polyester, enthalten.
D) Die Formmasse enthält 0,01 bis 5, vorzugsweise 0,2 bis 2 Gew.-Teile, bezogen auf 100 Gew.-Teile Polyester, eines Polymerisationsinititators. Als Polymerisationsinitiatoren werden übliche, bei Temperaturen oberhalb von 50°C in Radikale zerfallende Peroxide eingesetzt. Ihre Halbwertszeit bei 50°C soll vorzugsweise größer als 100 h sein. In Frage kommen Diacylperoxide, Peroxydicarbonate, Peroxyester, Perketale, Ketonperoxide, Hydroperoxide und Dialkylperoxide. Daneben können auch Azo- und C-C-labile Verbindungen als Radikalinitiatoren verwendet werden.
E) Als weitere übliche Zusatz- und Hilfsstoffe kommen in Frage: Verstärkungsfasern in Mengen von 10 bis 400 Gew.-Teilen, bezogen auf 100 Gew.-Teile ungesättigtem Polyester. Als Verstärkungsfasern können die bekannten anorganischen und organischen Fasern, z.B. aus Glas, Kohlenstoff, Cellulose, Polyethylen, Polycarbonsäureestern oder Polyamid eingesetzt werden. Sie können in Form von Kurzfasern oder als gemahlene Fasern vorliegen, als Langfasern in Form von Einzelrovings, Bahnen aus parallelen Rovings, Gelege aus orientierten Fasern, Fasermatten, Faservliese, Fasergewebe oder Fasergewirke, bevorzugt aber als geschnittene Rovings einer Länge von bis zu 5 cm.
   Füllstoffe in Mengen von 0 bis 300 Gew.-Teilen, wie Kreide, Kaolin, Quarzmehl, Talkum, Aluminiumoxidhydrat, Dolomit, Glimmer und Wollastonit.
   Thermoplastische Polymerisate in Mengen von bis zu 100, vorzugsweise von 5 bis 50 Gew.-Teile, bezogen auf 100 Gew.-Teile ungesättigtem Polyester, als schwundmindernder oder elastifizierender Zusatz. Als thermoplastisches Polymer kommen z.B. Polystyrol, schlagfest modifiziertes Polystyrol, Polymethylmethacrylat, Polyvinylacetat, Ethylenvinylacetatcopolymer und entsprechende Copolymere und Pfropfcopolymere in Frage. Es eignen sich auch gesättigte Polyester und thermoplastische Polyurethane. Ebenfalls geeignet sind kautschukartige Blockcopolymere, insbesondere solche aus 40 bis 95 Gew.-% eines Diolefins, z.B. Butadien, Isopren oder Chloropren, und 60 bis 65 Gew.-% eines Vinylaromaten, z.B. Styrol oder p-Methylstyrol.
   Eindickmittel in Mengen von 0,1 bis 10 Gew.-Teilen, bezogen auf 100 Gew.-Teile ungesättigtem Polyester, werden zugesetzt, wenn aus der Formmasse flächige SMC-Massen hergestellt werden sollen. Zum Eindicken werden die üblichen Eindickmittel, z.B. Oxide und Hydroxide des Magnesiums, Zinks oder Calciums verwendet, ferner Isocyanate, gegebenenfalls zusammen mit Amin, benutzt.
   Weitere Zusatzstoffe sind Inhibitoren, wie Phenole, Chinone und Nitrosoverbindungen; Gleitmittel, wie Polyethylenpulver; Paraffinwachse zur Verhinderung der Styrolverdunstung, Beschleuniger, Flammschutzmittel, Formtrennmittel, Viskositätsverminderer und Pigmente.

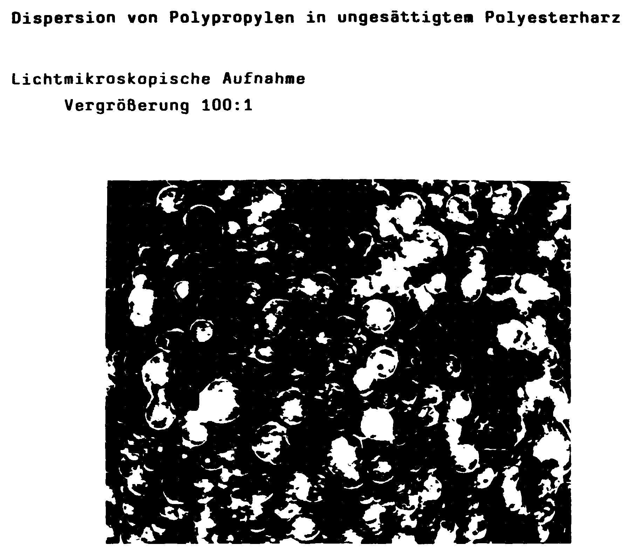

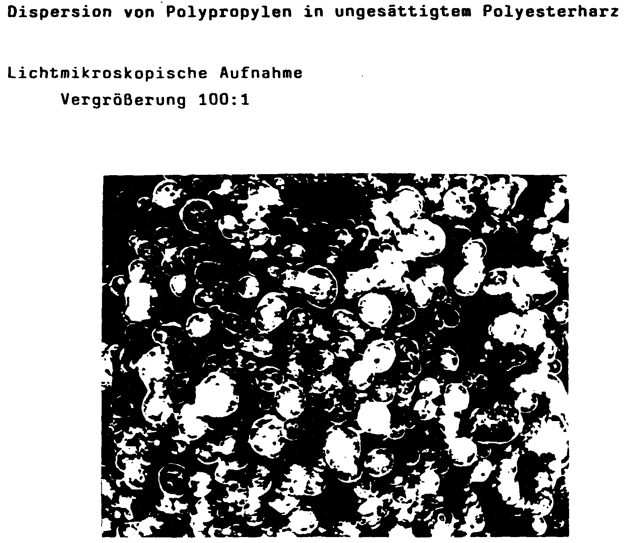

Zur Herstellung der erfindungsgemäßen Formmasse wird zunächst eine Schmelze des ungesättigten Polyesters A mit einer Schmelze des Propylenpolymerisats C zusammengeführt und die Schmelze einem starken Scherfeld unterworfen. Dies kann z.B. in einem Doppelwellenextruder erfolgen, in dem das Propylenpolymerisat bei 180 bis 220°C aufgeschmolzen wird, und in welchem durch eine Pumpe oder über einen Seitenextruder bei 100 bis 150°C die Schmelze des ungesättigten Polyesters zugeführt wird. Die Verweilzeit der Schmelze im Doppelschneckenextruder beträgt vorzugsweise 20 bis 300 s. Das Vermischen der Schmelzen soll in einem starken Scherfeld geschehen, d.h., die Dissipationsenergie soll vorzugsweise größer als 0,05 [kWh·kg⁻¹], betragen, insbesondere zwischen 0,1 und 0,4 [kWh·kg⁻¹] liegen. Die Dissipationsenergie ist der spezifische Energieeintrag in das Scherorgan. Sie kann z.B. bei einem Doppelschneckenextruder berechnet werden aus dem Drehmoment und der Leistungsaufnahme des Elektromotors, der die Energie auf die beiden Wellen des Extruders überträgt. Durch die starke Scherung wird das Propylenpolymerisat auf eine Teilchengröße von weniger als 200 µm, insbesondere von 10 bis 100 µm zerteilt. Da die Zerteilung in der Schmelze erfolgt, entstehen runde, annähernd kugelförmige Partikel mit glatter Oberfläche, die in dieser Form auch beim Abkühlen als disperse Phase in der kohärenten Polyesterphase erhalten bleiben. Dies zeigt sehr schön die beigefügte Abbildung, eine mikroskopische Aufnahme einer Polypropylendispersion in styrolischer Lösung eines ungesättigten Polyesterharzes im Dunkelfeld/Dunkellicht.

Das Abkühlen auf Temperaturen unterhalb des Kristallitschmelzpunktes des Propylenpolymeren, vorzugsweise unterhalb von 120°C, erfolgt noch im Extruder, so daß aus diesem eine Dispersion von festen Propylenpolymer-Partikeln im flüssigem ungesättigtem Polyester ausgepreßt wird. Diese Dispersion wird dann entweder direkt mit Monomeren B vermischt oder sie wird weiter abgekühlt, indem man sie z.B. in Wasser extrudiert und granuliert. Das trockene, blockfeste Granulat kann gelagert und transportiert und bei Bedarf im Monomeren B gelöst werden. Grundsätzlich kann die erfindungsgemäße Formmasse auch monomerfrei als rieselfähige Spritzgußmasse verarbeitet werden. In diesem Fall sind kristalline ungesättigte Polyester vorzuziehen, die bevorzugt aus symmetrischen Monomerbausteinen, wie Fumarsäure, Terephthalsäure, Butandiol-1,4 oder Hexandiol-1,6 aufgebaut sind.

Der flüssigen Dispersion von Propylenpolymerisatpartikeln im Polyesterharz (ungesättigter Polyester + Monomer) werden nun - zweckmäßigerweise in zwei Stufen - die Zusatzstoffe D und E zugemischt. Zunächst werden schrumpfmindernde Thermoplasten, Inhibitoren, Beschleuniger, Viskositätserniedriger und Wachse, zweckmäßigerweise jeweils gelöst oder dispergiert im Monomeren B, zugegeben. Die erhaltene Dispersion ist gut fließfähig und lagerfähig. In Ausnahmefällen, nämlich bei hohem Gehalt an Propylenpolymerisat, liegt sie als Paste vor, die zur Weiterverarbeitung leicht erwärmt werden muß. Kurz vor der Weiterverarbeitung wird dann der Radikalinitiator D zugefügt, gegebenenfalls zusammen mit Füllstoffen, Fasern, Trennmitteln, Gleitmitteln und Eindickmitteln. Will man SMC-Massen herstellen, dann wird die Masse mit Verstärkungsfasern zusammen zu einem flächigen Halbzeug geformt und eingedickt.

Die erfindungsgemäße wärmehärtbare Formmasse liegt also als flächiges Halbzeug (SMC), als teigförmige Masse (BMC), als rieselfähige Spritzgußmasse oder als Paste vor. Die Weiterverarbeitung kann dementsprechend nach verschiedenen Methoden vorgenommen werden: SMC-Massen werden in Pressen, BMC-Massen und rieselfähige Massen durch Spritzgießen oder Spritzprägen und Pasten durch Pultrusion verformt. Während oder nach dem Verformen erfolgt die Härtung des Polyesterharzes, vorzugsweise bei Temperaturen oberhalb von 50°C, insbesondere zwischen 120 und 170°C.

Bei relativ niedrigem Gehalt der Formmasse an Komponente C, z.B. bei 10 bis 100 Gew.-Teilen, bleibt nach der Härtung das Propylenpolymerisat als disperse Phase im gehärteten Polyesterharz als kohärenter Phase. Das Propylenpolymerisat bewirkt im Formteil eine drastische Erhöhung der Zähigkeit, wobei aber der Duromercharakter der Formteile, d.h., hohe Wärmeformbeständigkeit und gute Oberflächeneigenschaften, erhalten bleiben. Bei höherem Gehalt der Formmasse an Propylenpolymerisat, z.B. von 80 bis 180 Gew.-Teilen, gelingt es in manchen Fällen, beim Härten eine Phaseninversion zu erzielen, so daß das Propylenpolymerisat zumindest teilweise kohärente Phase wird, in die vernetzte Polyesterharz-Partikel als disperse Phase eingelagert sind. Diese Phaseninversion kann durch folgende Maßnahmen gefördert werde: hoher Schmelzindex und niedriger Kristallitschmelzpunkt des Propylenpolymerisats, geringe Reaktivität des Härtersystems, starke Systeminhibierung und hohe Werkzeugtemperatur beim Härten. Derartige Formteile sind in Grenzen thermoplastisch verformbar, z.B. kann man sie in der Wärme umformen und verpressen, insbesondere sind Abfall- und Altteile recyclierbar. Anwendungsgebiete der erfindungsgemäßen Formmassen sind die Herstellung von Automobilteilen, z.B. im Karosseriebereich, Motorhauben, Heckklappen, Stoßfängerträger, Frontends und im Motorbereich Schalläbschirmungen, Ansaugkrümmer und Abdeckungen, ferner Ersatzradmulden, Rückenlehnen für Sitze und Reflektoren für Scheinwerfer. Daneben spielen auch Anwendungen im Elektrosektor eine Rolle, z.B. die Herstellung von Verteilerkästen, Langfeldleuchten und Gehäusen für Elektroanlagen.

Die in den Beispielen genannten Prozente und Teile beziehen sich auf das Gewicht.

### Beispiele

### A) Ungesättigte Polyesterharze

UP-Harz A1
   In einem zweistufigen Kondensationsverfahren wurde der monomerenfreie ungesättigte Polyester unter Rühren und durch Überleiten von Stickstoff hergestellt. In der ersten Stufe reagierten Isophthalsäure, Neopentylglykol und Propylenglykol im Molverhältnis 1:1,2:0,23 bei Temperaturen bis 200°C bis zur Säurezahl 10 und einer Schmelzviskosität bei 125°C von 1000 [mPa·s] (Platte/Konus-Viskosimeter, Fa. Epprecht Instruments + Controls AG). Nach Zusatz von Maleinsäure und weiterem Neopentylglykol im Molverhältnis 1:0,6, bezogen auf 1 Mol eingesetzte Isophthalsäure, wurde schließlich bis Säurezahl 19 und Schmelzviskosität (175°C) 4300 [mPa·s] verestert, auf 150°C abgekühlt, 180 ppm Hydrochinon zugefügt und in Kühlwannen ausgegossen. Beim Abkühlen auf 23°C erstarrte das Produkt glasartig und ließ sich brechen. Das Granulat war blockfest beim Lagern und hatte einen Erweichungspunkt von 80°C (nach Krämer-Sarnow-Nagel).
UP-Harz 2 (Vergleich)
   Das UP-Harz 1 wurde 56 %ig in Styrol gelöst und mit 0,3 % Propylenglykol versetzt. Die Lösung hatte eine Viskosität (23°C) von 1300 [mPa·s] (nach DIN 53 214) und einen Brechungsindex (20°C) von 1,54 (DIN 51 423, T. 1).

### C) Propylenpolymerisate

C1 Propylenhomopolymerisat mit Schmelzindex
   MFI (230/2,16):70 [g/10 min] (DIN 53 735), Schmelzpunkt (DSC): 162 [°C] (ISO 3146) und der Dichte 0,907 [g/cm³] (DIN 53 479-A).
C2 Propylenhomopolymerisat, das mit 0,15 % Maleinsäureanhydrid gepfropft ist und einen Schmelzindex MFI (230/2,16) von 27 sowie einen Schmelzpunkt (DSC) von 162°C aufweist.

### Patentbeispiel 1

Beschrieben werden die Schmelzedispergierung von Polypropylen in einem ungesättigten Polyester, die Herstellung einer bei Raumtemperatur fließfähigen Dispersion in styrolischer Polyesterharzlösung und deren Verarbeitung zu SMC, wie das beiliegende Schema verdeutlicht.
a) Schmelzedispergierung
Zur Herstellung von Granulaten mit disperser Polypropylenphase wurde Polypropylen C1 in einem Doppelwellenextruder (Typ ZSK 30, Werner & Pfleiderer) bei 170°C aufgeschmolzen und aus einem Seitenextruder mit der 120°C heißen Schmelze des ungesättigten Polyesters A1 beschickt. Der spezifische Energieeintrag betrug 0,2 [kwh·kg⁻¹], die Schneckendrehzahl 150 Umdrehungen/min, die Temperatur in der Mischzone 154°C und an der Strangaustrittsdüse 150°C. Der Strang wurde durch Wasser gezogen und granuliert. Er enthielt 45 % Polypropylen und 55 % ungesättigten Polyester. Das Granulat ließ sich bei 23°C wochenlang ohne Blockbildung lagern.
b) Herstellung einer Dispersion
In einer Rührapparatur wurden 30 Teile Styrol bei 23°C portionsweise unter Rühren mit 70 Teilen des obigen Granulats vermischt, 100 ppm Hydrochinon sowie 500 ppm tert. Butylbrenzkatechin zugesetzt und auf 80°C erwärmt. Nach zwei Stunden war eine fließfähige Dispersion mit Säurezahl 8,3 und einer Viskosität (23°C) von 18.800 [mPa·s] entstanden. Zur Charakterisierung der Polypropylenphase wurde die Dispersion lichtmikroskopisch untersucht. Das beigefügte Photo zeigt eine Dunkelfeld/Durchlicht-Aufnahme (Vergrößerung 100:1) der Polypropylendispersion im UP-Harz. Die mittlere Teilchengröße liegt bei ca. 50 µm. Die Teilchen haben eine annähernd runde Form und glatte Oberfläche.
c) SMC-Herstellung und Prüfung
Mit Hilfe eines schnell laufenden Rührwerks wurde folgende Harz/ Füllstoffmischung präpariert:

| | |
|---|---|
| 100 Teile | Dispersion 1b) |
| 0,3 Teile | Propylenglykol |
| 1,5 Teile | tert.Butylperbenzoat |
| 50 Teile | Füllstoff Kreide Millicarb® |
| 4,5 Teile | MgO-Paste Luvatol® MK 35 |
| 4,0 Teile | Zinkstearat |

Die SMC-Herstellung erfolgte auf einer Technikumsanlage, bei der die Harz/Füllstoff-Mischung auf einer Polyethylenfolie mit geschnittenen Glasfaserrovings (2,5 cm lang) vereinigt, aufgerollt und 3 Tage bei 23°C gelagert wurde. Danach ließen sich die Abdeckfolien abziehen, und das klebfreie SMC wurde in einem polierten Stahlwerkzeug 5 min lang unter 50 bar bei 145°C zu 4 mm dicken Platten mit einem Glasfasergehalt von 40 % verpreßt. Tabelle 1 zeigt einen Eigenschaftsvergleich zwischen Formstoffen aus SMC 1c und glasmattenverstärktem Polypropylen mit 40 Gew.-% Glasfasern (GM-PP 40). Die Vorteile der erfindungsgemäßen Füllstoffe sind bei allen Prüfergebnissen deutlich, insbesondere bei Stoßbeanspruchung im Kugelfalltest.
Der Kugelfalltest wird folgendermaßen ausgeführt. Für diesen Test werden aus 4 mm dicken Formstoffplatten Prüfkörper (80 x 80 mm) ausgearbeitet, zwischen Metallringen (Durchmesser 60 mm) eingespannt und darauf aus 70 cm Höhe eine Stahlkugel (761 g, Durchmesser: 57,1 mm) fallen gelassen. Die Zugseite des geschädigten Prüfkörpers wird mit roter Farbstofflösung (Diffusionsrot, Fa. H. Klumpf) eingesprüht, nach 5 min mit Wasser abgewaschen, getrocknet und der Durchmesser der roten Schädigungszone ermittelt. Durch die Mitte der Schädigungszone wird aufgeschnitten und an der Schnittfläche die Dicke der roten Zone gemessen (Lupe mit Skala). Je geringer die Zahlenwerte beider Meßgrößen sind, desto unempfindlicher verhalten sich die Formstoffe bei Stoß- oder Schlagbeanspruchung.

**Tabelle 1**

| | Formstoff aus SMC 1C | Vergleich GM-PP 40 |
|---|---|---|
| E-Modul (nach EN 63) [N/mm²] | 11.000 | 5.600 |
| Schlagzähigkeit (23°C) | 100 | 70 |
| nach DIN 53453) [kJ/m²] | | |
| Kugelfalltest | | |
| Schädigungstiefe [mm] | 0,8 | 2,5 |
| Schädigungszone [mm] | 15 | 25 |
| (Durchmesser) | | |

### Patentbeispiel 2

a) Schmelzedispergierung
MSA-gepfropftes Polypropylen C2 wurde in einem Doppelwellenextruder (ZSK 30) bei 220°C aufgeschmolzen und aus einem Seitenextruder mit der Schmelze des ungesättigten Polyesters A1 gemischt. Die Wellen in beiden Extrudern wurden mit 150 Umdrehungen pro Minute gedreht, die Temperatur in der Mischzone betrug 180°C und an der Austrittsdüse 150°C. Der spezifische Energieeintrag betrug 2,18 [kWh·kg⁻¹]. Nach dem Passieren eines Wasserbads ließ sich der Produktstrang granulieren. Das blockfest lagerfähige Granulat enthielt 40 % Polypropylen C2 und 60 % ungesättigten Polyesters A1.
b) Herstellung einer Dispersion
In einer Rührapparatur wurden 30 Teile Styrol bei 23°C portionsweise unter Rühren mit 70 Teilen Granulat 2a vermischt, 100 ppm 2,6-Dimethylchinon und 500 ppm tert.Butyl-p-kresol zugesetzt und auf 80°C erwärmt. Nach 3 Stunden war eine fließfähige Dispersion mit der Viskosität (23°C) von 29.300 [mPa·s] entstanden.
c) Herstellung und Prüfung von Naßpreßlaminaten
Mit einem schnell laufenden Rührwerk wurden aus Dispersion 2b folgende Mischungen hergestellt:

| | |
|---|---|
| 100 Teile | Dispersion 2b |
| 1,5 Teile | tert.Butylperbenzoat |
| verschiedene Mengen | Füllstoff (Kreide). |

Zum Vergleich wurden auch aus UP-Harz 2 entsprechende Mischungen hergestellt. Durch Tränken von fünf Lagen Glasfasermatten (styrolunlöslich gebunden) wurden Laminate erhalten, die in einem Plattenwerkzeug aus Stahl (4 x 150 x 150 mm) bei 170°C unter 200 bar 20 min verpreßt und durch den Kugelfalltest geprüft wurden.
Die Ergebnisse in Tabelle 2 zeigen, daß die erfindungsgemäßen Laminate mit disperser Polypropylenphase geringere Stoßempfindlichkeit aufweisen als solche auf seiner UP-Harzbasis.

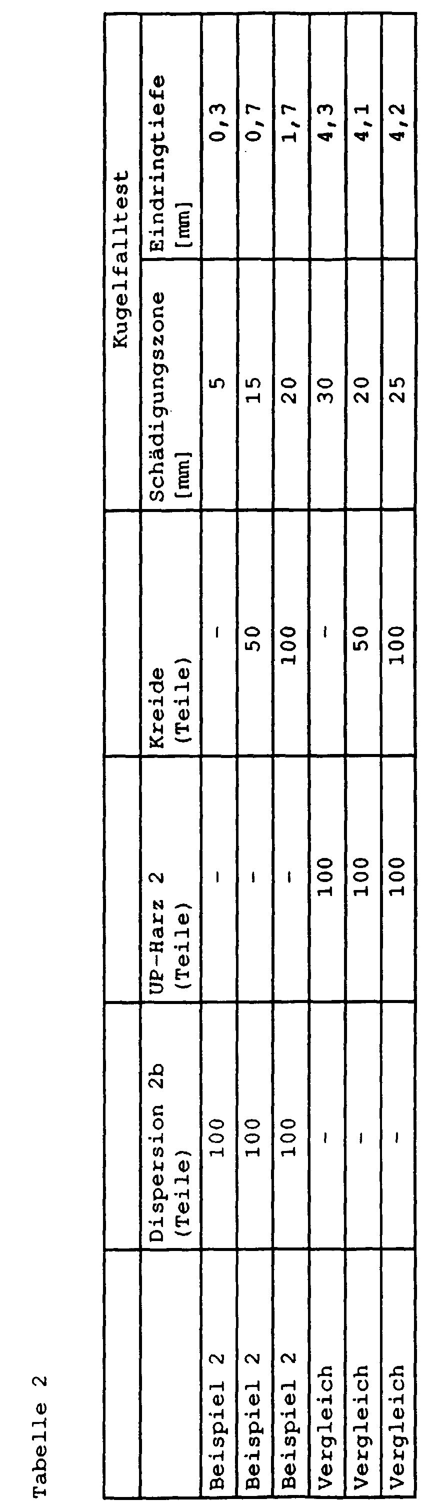

## Patentansprüche

1. Wärmehärtbare Formmasse, enthaltend
A) 100 Gew.-Teile eines ungesättigten Polyesters,
B) 0 bis 400 Gew.-Teile eines mit A copolymerisierbaren Vinyl- oder Allyl-Monomeren,
C) 5 bis 200 Gew.-Teile eines teilkristallinen Propylenhomo- oder -copolymerisats mit überwiegendem Propylenanteil und statistischer Verteilung der Monomeren,
D) 0,01 bis 5 Gew.-Teile eines radikalischen Initiators,
E) übliche Zusatz- und Hilfsstoffe,
dadurch gekennzeichnet, daß die Komponente C in Form von festen, runden Partikeln mit glatter Oberfläche und einem mittleren Durchmesser von 1 bis 200 µm in einer kohärenten Phase der Komponenten A + B dispergiert ist.

2. Wärmehärtbare Formmasse nach Anspruch 1, dadurch gekennzeichnet, daß die Formmasse als Komponente B 20 bis 150 Gew.-Teile Styrol, Vinyltoluol, Methylmethacrylat, Diallylphthalat oder Diallylisophthalat enthält.

3. Wärmehärtbare Formmasse nach Anspruch 1, dadurch gekennzeichnet, daß die Komponente C ein Propylenpolymerisat mit einem Schmelzflußindex MFI größer 10 g/10 min (bei 230°C und 2,16 kg) und einem Kristallitschmelzpunkt von höher als 125°C ist.

4. Verfahren zur Herstellung der Formmasse nach Anspruch 1, dadurch gekennzeichnet, daß man eine Schmelze des ungesättigten Polyesters A mit einer Schmelze des Propylenpolymerisats C zusammenführt, die flüssige Mischung einem starken Scherfeld unterwirft, wobei das Propylenpolymerisat auf eine Teilchengröße von weniger als 200 µm zerteilt wird, die Schmelze auf eine Temperatur unterhalb des Kristallitschmelzpunktes des Propylenpolymerisats abkühlt, so daß eine Dispersion von festen Propylenpolymerisatpartikeln in flüssigem ungesättigtem Polyester entsteht, dann entweder der Dispersion direkt das Monomere B zusetzt, oder die Dispersion abkühlt und dann gegebenenfalls in dem Monomeren B löst, und schließlich die Zusatzstoffe D und E zumischt.

5. Verfahren zur Herstellung von Formkörpern, dadurch gekennzeichnet, daß man die Formmasse nach Anspruch 1 formt und bei Temperaturen oberhalb von 50°C härtet.

## Claims

1. A heat-curable molding material containing
A) 100 parts by weight of an unsaturated polyester,
B) from 0 to 400 parts by weight of a vinyl or allyl monomer copolymerizable with A,
C) from 5 to 200 parts by weight of a semicrystalline propylene homo- or copolymer containing predominantly propylene and having a random distribution of the monomers,
D) from 0.01 to 5 parts by weight of a free radical initiator and
E) conventional additives and assistants,
wherein component C is dispersed in the form of solid, round particles having a smooth surface and a mean diameter of from 1 to 200 µm in a coherent phase of components A + B.

2. A heat-curable molding material as claimed in claim 1, which contains, as component B, from 20 to 150 parts by weight of styrene, vinyltoluene, methyl methacrylate, diallyl phthalate or diallyl isophthalate.

3. A heat-curable molding material as claimed in claim 1, wherein component C is a propylene polymer having a melt flow index MFI greater than 10 g/10 min (at 230°C and 2.16 kg) and a crystallite melting point higher than 125°C.

4. A process for the preparation of a molding material as claimed in claim 1, wherein a melt of the unsaturated polyester A is combined with a melt of the propylene polymer C, the liquid mixture is subjected to a strong shear field, the propylene polymer being comminuted to a particle size of less than 200 µm, the melt is cooled to below the crystallite melting point of the propylene polymer so that a dispersion of solid propylene polymer particles in liquid unsaturated polyester is formed, then either the monomer B is added directly to the dispersion or the dispersion is cooled and then, if required, dissolved in the monomer B, and finally the additives D and E are mixed in.

5. A process for the production of a molding, wherein the molding material as claimed in claim 1 is shaped and is cured at above 50°C.

## Revendications

1. Masse de moulage thermodurcissable contenant :
(A) 100 parties en poids d'un polyester insaturé
(B) de 0 à 400 parties en poids d'un monomère vinyle ou allyle copolymérisable avec A,
(C) de 5 à 200 parties en poids d'un homo- ou copolymérisat de propylène partiellement cristallin, avec une majeure partie de propylène et une distribution statistique des monomères,
(D) de 0,01 à 5 parties en poids d'un initiateur radicalaire,
(E) des additifs et des produits auxiliaires usuels,
caractérisé par le fait que le composant C se présente sous la forme de particules solides, rondes, à surface lisse, ayant un diamètre moyen de 1 à 200 µm et mises en dispersion en une phase cohérente des composants A + B.

2. Masse de moulage thermodurcissable selon la revendication 1, caractérisée par le fait que la masse de moulage contient, comme composant B, de 20 à 150 parties en poids de styrène, de vinyltoluène, de méthylméthacrylate, de diallyphtalate ou de diallylisophtalate.

3. Masse de moulage thermodurcissable selon la revendication 1, caractérisée par le fait que le composant C est un polymérisat de propylène avec un indice de fusion MFI supérieur à 10 g/10 min (à 230°C et 2,16 kg) et un point de fusion de cristallite supérieure à 125°C.

4. Procédé de fabrication de la masse de moulage selon la revendication 1, caractérisée par le fait que l'on mélange le polyester insaturé A en fusion avec le polymérisat de propylène C en fusion, on soumet le mélange liquide à un fort champ de cisaillement, le polymérisat de propylène est ramené à une taille particulaire inférieure à 200 µm, le produit en fusion est refroidi à une température inférieure à la température de fusion de la cristallite du polymérisat de polypropylène, de manière qu'une dispersion de particules solides de polymérisat de polypropylène apparaisse dans le polyester insaturé liquide, puis soit on injecte directement à la dispersion le monomère (B), soit on refroidit la dispersion, puis, le cas échéant, on la dissout dans le monomère B et, enfin, on ajoute par mélange les additifs D et E.

5. Procédé de fabrication de corps moulé, caractérisé par le fait que la masse de moulage selon la revendication 1 est moulée et est durcie à des températures supérieures à 50°C.
